# EUROPEAN PATENT APPLICATION

(11) **EP 2 591 925 A1**
(43) Date of publication of application: **15.05.2013**
(21) Application number: 11803389.3
(22) Date of filing: 12.05.2011
(51) Int. Cl.: B60C 27/04, B60C 27/00

(54) **TYRE ANTI-SKID DEVICE**

(30) Priority: 06.07.2010 JP 2010153698
(71) Applicant: Sakakibara, Kouichi, Hashima-shi, Gifu 501-6335 (JP)
(72) Inventor: Sakakibara, Kouichi, Hashima-shi, Gifu 501-6335 (JP)
(74) Representative: Kuhnen & Wacker
(86) International application number: PCT/JP2011/060964
(87) International publication number: WO 2012/005053

(57) **Abstract**

In an anti-skid device in which anti-skid bodies having U-shaped cross-section are arranged to be fitted therein with a tire of a car, a structure for attaching contact members to contact with the tire is simplified. Anti-skid bodies (1a), (1b), and (1c) each comprises a front-side U-shaped member (2) and a rear-side U-shaped member (3). The front-side and the rear-side U-shaped members have exterior parts (2b) and (3b) and interior parts (2c) and (3c), and contact members (6) are attached thereto for contacting with the inside surface or the outside surface of tire (T). Each of the contact members has a cylindrical shape. The front-side or the rear-side U-shaped member is configured such that the exterior part or the interior part thereof is located along the radial direction of the tire, and an end portion of the exterior part or the interior part is bent and extends toward the front-side or the rear-side, and each contact member is attached to the extending end portion of the exterior part or the interior part so as to be inserted therein with the extending end portion.

## Description

### [Technical Field]

The present invention relates to an anti-skid device to be attached to a tire for cars.

### [Background Art]

Patent literatures (PTLs below) disclose for example an anti-skid device in which anti-skid bodies having U-shaped cross section are fitted therein with a tire of a car from the circumference side thereof. Two or more anti-skid bodies are arranged around the entire circumference of the tire at regular intervals to be connected with one another. The two or more anti-skid bodies are attached to the tire in a circular fashion. When the anti-skid device is required to be detached from the tire, the anti-skid bodies are separated from one another thereby to be released.

Each anti-skid body comprises a front-side U-shaped member and a rear-side U-shaped member respectively located at the front-side and the rear-side with respect to the rotation direction of the tire when the car moves forward, and an interior-side linear-shaped member located along the inside surface of the tire. Each of the front-side and the rear-side U-shaped members has a crossing part crossing the ground contact surface of the tire, an exterior part located along the outside surface of the tire, and an interior part located along the inside surface of the tire. The interior-side linear-shaped member connects the interior parts of the front-side and the rear-side U-shaped members with each other.

The exterior parts of the anti-skid body are attached thereto with respective linking members at the front-side end and the rear-side end in the circumference direction of the tire. Each linking member is provided as a chain and attached thereto with a linking component. When linking the anti-skid bodies, the rear-side linking member of one anti-skid body is linked in a separable manner with the front-side linking member of the next anti-skid body using the linking component.

The exterior parts of the anti-skid body are attached thereto with contact members for contacting with the outside surface of the tire. The interior parts of the anti-skid body are also attached thereto with contact members for contacting with the inside surface of the tire.

### [Citation List]

### [Patent Literature]

[PTL1]
   Japanese Patent No. 3557464
[PTL 2]
   Japanese Patent No. 3718779
[PTL 3]
   Japanese Unexamined Patent Application Publication No. 2008-308149

### [Summary of Invention]

### [Technical Problem]

### [Problems]

In the above anti-skid device for tires, each anti-skid body is configured such that respective contact members are attached to the front-side and the rear-side of the exterior parts and the front-side and the rear-side of the interior parts. Similar attaching structures are employed for those four contact members. Problems will be described as for the attaching structure for the front-side contact member of the exterior part.

A linking plate is provided between the exterior part of the front-side U-shaped member of the anti-skid body and the linking member. The linking plate is formed therein a threaded hole passing through in the width direction of the anti-skid body. A threaded shaft such as a bolt is screwed into the threaded hole. The threaded shaft penetrates the linking plate in the width direction of the anti-skid body. The inner end of the threaded shaft protruding into the anti-skid body acts as a disk-shaped contact member. The outer end portion of the threaded shaft protruding outward from the anti-skid body is screwed into a nut, and means for preventing the nut from falling off is additionally provided.

Such an attaching structure for the contact member requires a substantial number of components and is not easy to be assembled. In addition, the contact member may possibly damage the wheel of the tire when contacting with it because in general the contact member is made of metal.

### [Original ideas]

Original ideas will be described as for the attaching structure for the front-side contact member of the exterior part of the anti-skid body.
The front-side U-shaped member of the anti-skid body is configured such that the exterior part thereof is located along a radial direction of the tire, and an end portion of the exterior part is bent and extends toward the front-side. A contact member having a cylindrical-like shape is attached to the front-side extending end portion of the exterior part so as to be inserted therein with the front-side extending end portion. The cylindrical-like contact member has an outer surface to contact with the outside surface of the tire.
The attaching structure, in which the cylindrical-like contact member is inserted therein with the front-side extending end portion of the exterior part of the front-side U-shaped member, does not require to use a threaded shaft, such as a bolt, and nut. Reducing the number of components allows the structure to be simplified.

The cylindrical-like contact member may be made of rubber or elastic synthetic resin. If the cylindrical-like contact member is made of rubber or elastic synthetic resin, then the wheel of the tire will be prevented from being damaged. Moreover, the cylindrical-like contact member may be configured as being rotatable around an axis. This configuration allows the contact position of the contact member with the outside surface of the tire to vary, thereby preventing unbalanced abrasion.

### [Solution to Problem]

1. According to the present invention, there is provided an anti-skid device for tires.
   The anti-skid device comprises two or more anti-skid bodies for being fitted therein with a tire of a car and arranged around entire circumference of the tire to be connected with one another. Each of the anti-skid bodies has a U-shaped cross-section and comprises a front-side U-shaped member and a rear-side U-shaped member respectively located at front-side and rear-side with respect to a rotation direction of the tire when the car moves forward. Each of the front-side U-shaped member and the rear-side U-shaped member has an exterior part and an interior part respectively along an outside surface and an inside surface of the tire. The exterior part is attached thereto with a contact member for contacting with the outside surface of the tire. The interior part is attached thereto with a contact member for contacting with the inside surface of the tire. Each contact member has a cylindrical-like shape for contacting with the outside surface or the inside surface of the tire. The front-side U-shaped member or the rear-side U-shaped member is configured such that the exterior part or the interior part thereof is located along a radial direction of the tire, and an end portion of the exterior part or the interior part is bent and extends toward the front-side or the rear-side. The contact member is attached to the extending end portion of the exterior part or the interior part so as to be inserted therein with the extending end portion.
2. In such an anti-skid device for tires, each anti-skid body may be configured such that the front-side and the rear-side of one or more exterior parts are attached thereto with respective outside contact members for contacting with the outside surface of the tire and the front-side and the rear-side of one or more interior parts are attached thereto with respective inside contact members for contacting with the inside surface of the tire, and the outside contact members and the inside contact members may be formed as being cylindrical-like shape. The front-side U-shaped member may be configured such that the exterior part thereof is located along a radial direction of the tire, and an end portion of the exterior part is bent and extends toward the front-side, and the contact member of outside is attached to the front-side extending end portion of the exterior part so as to be inserted therein with the front-side extending end portion. The front-side U-shaped member may further be configured such that the interior part thereof is located along a radial direction of the tire, and an end portion of the interior part is bent and extends toward the rear-side, and the contact member of inside is attached to the rear-side extending end portion of the interior part so as to be inserted therein with the rear-side extending end portion. The rear-side U-shaped member may be configured such that the exterior part thereof is located along a radial direction of the tire, and an end portion of the exterior part is bent and extends toward the rear-side, and the contact member of outside is attached to the rear-side extending end portion of the exterior part so as to be inserted therein with the rear-side extending end portion. The rear-side U-shaped member may further be configured such that the interior part thereof is located along a radial direction of the tire, and an end portion of the interior part is bent and extends toward the front-side, and the contact member of inside is attached to the front-side extending end portion of the interior part so as to be inserted therein with the front-side extending end portion.
3. In the above anti-skid device for tires, each contact member may be made of rubber or elastic synthetic resin.
4. In the above anti-skid device for tires, each contact member may be configured as being rotatable around an axis.
5. In the above anti-skid device for tires, each contact member may be configured as being interchangeable.
6. In the above anti-skid device for tires, the extending end portion of the exterior part or the interior part of the front-side or the rear-side U-shaped member may be located along circumferential direction of the tire. The cylindrical-like contact member to which the extending end portion is inserted may have an outer surface of cylindrical surface or prismatic surface. The outer surface of the contact member may be configured to contact with the outside surface or the inside surface of the tire.
7. In either one of the above 1 to 5 anti-skid devices for tires, the extending end portion of the exterior part or the interior part of the front-side or the rear-side U-shaped member may be located to be inclined to circumferential direction of the tire. The cylindrical-like contact member to which the extending end portion is inserted may have an outer surface of conical surface or pyramid surface. The outer surface of the contact member may be configured to contact with an inner area of the outside surface or the inside surface of the tire such that the larger diameter end thereof is located near the center of the tire compared to the smaller diameter end.

### [Advantageous Effects of Invention]

The attaching structure is simple in which each cylindrical-like contact member is inserted therein with the extending end portion of the exterior part or the interior part of the front-side or the rear-side U-shaped member.
If each contact member is made of rubber or elastic synthetic resin, then the wheel of the tire may be prevented from being damaged.

### [Brief Description of Drawings]

[Fig. 1]

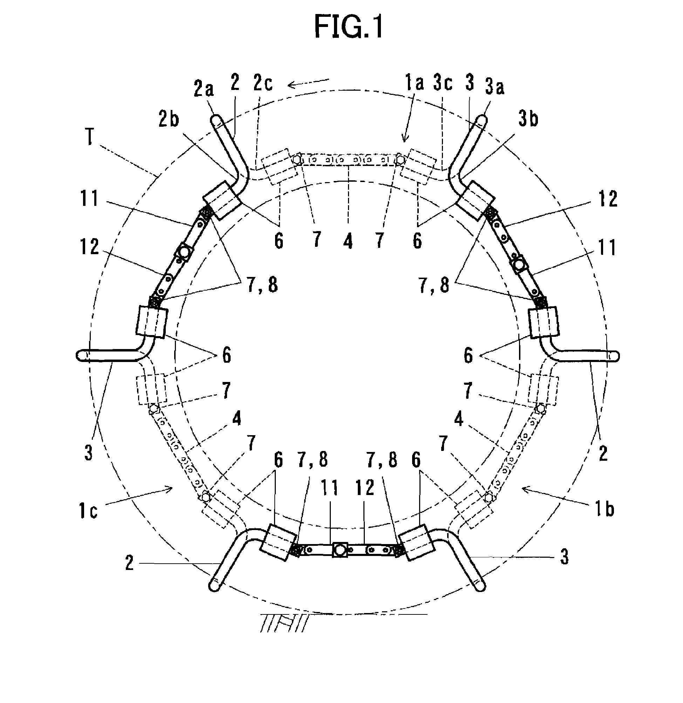

   Fig. 1 is a front elevational view of a status where an anti-skid device according to a first embodiment of the present invention is attached to a tire.
[Fig. 2]

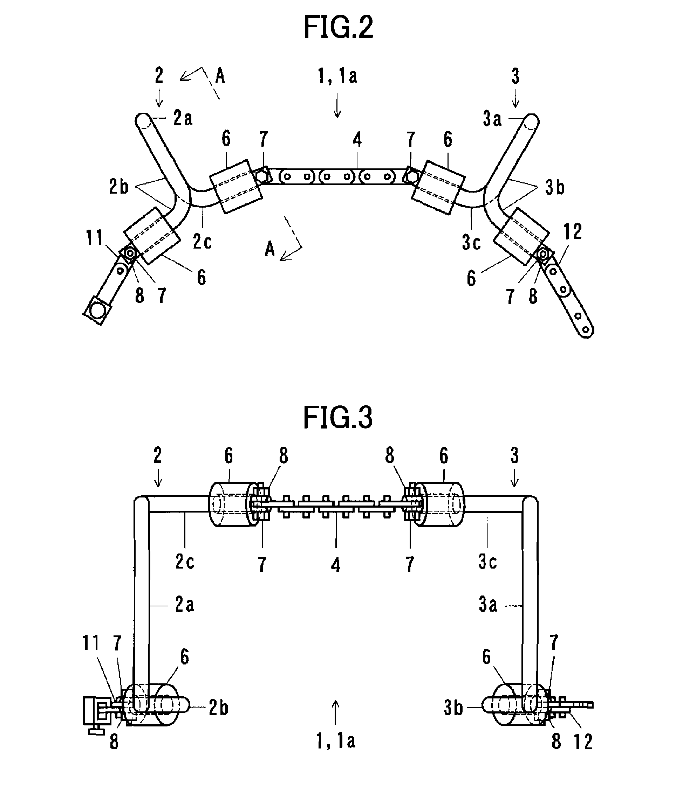

   Fig. 2 is an enlarged front elevational view of a first anti-skid body shown in Fig. 1.
[Fig. 3]
   Fig. 3 is an enlarged plan view of the first anti-skid body.
[Fig. 4]

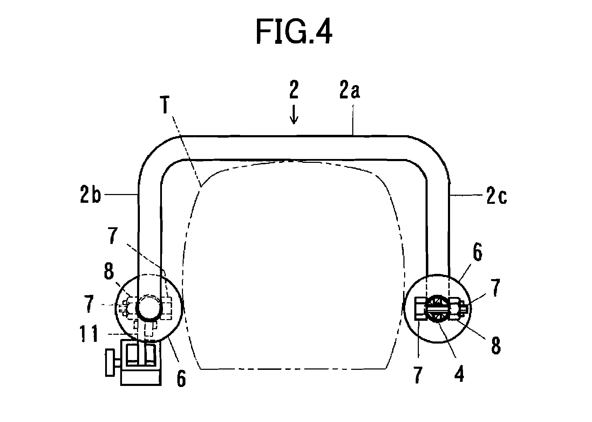

   Fig. 4 is an enlarged cross-sectional view along line A-A in Fig. 2.
[Fig. 5]

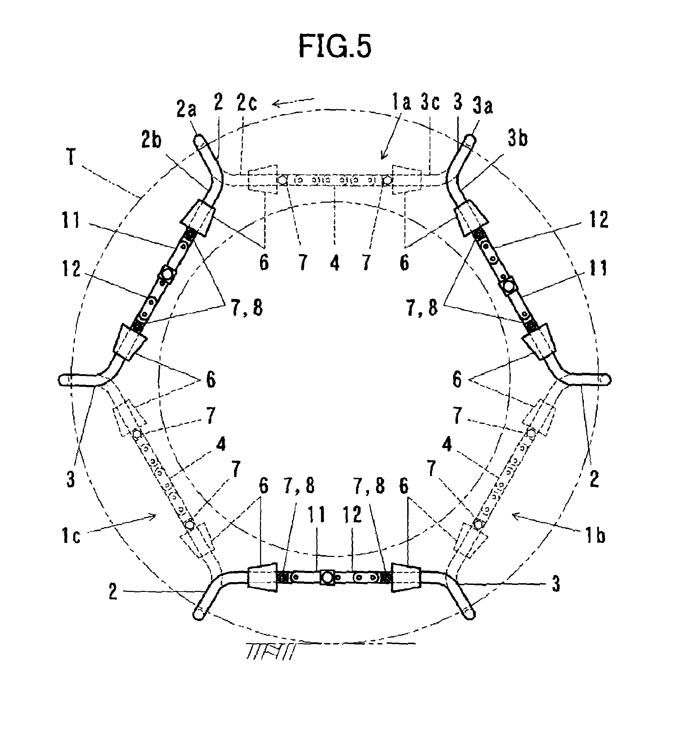

   Fig. 5 is a front elevational view of a status where an anti-skid device according to a second embodiment is attached to a tire.
[Fig. 6]

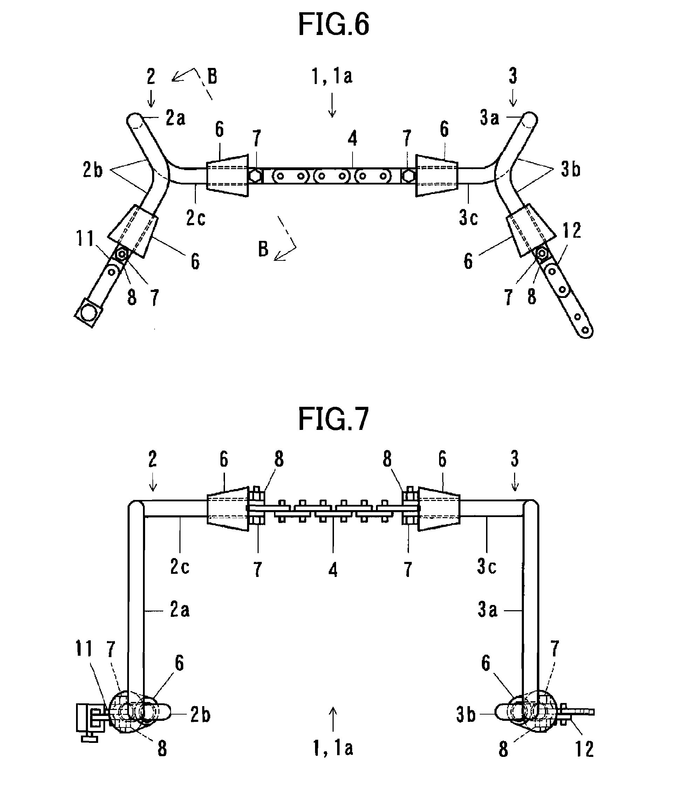

   Fig. 6 is an enlarged front elevational view of a first anti-skid body shown in Fig. 5.
[Fig. 7]
   Fig. 7 is an enlarged plan view of the first anti-skid body.
[Fig. 8]

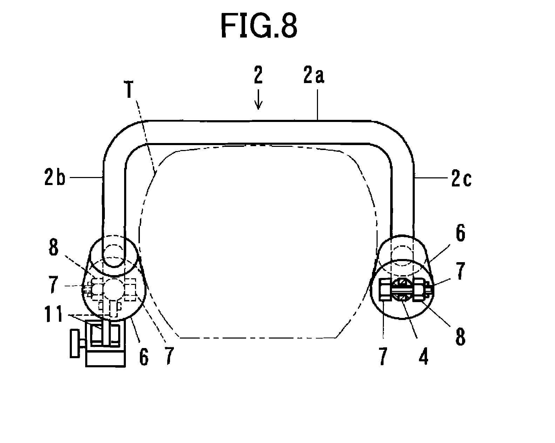

   Fig. 8 is an enlarged cross-sectional view along line B-B in Fig. 6.

### [Description of Embodiments]

### [First embodiment (refer to Fig. 1 to Fig. 4)]

Referring to Fig. 1, a front elevational view of an anti-skid device for tires according to the present embodiment is shown where a status that the anti-skid device is attached to a tire T of a car is viewed from the exterior of the car. The anti-skid device is configured such that a first anti-skid body 1a, a second anti-skid body 1b, and a third anti-skid body 1c (individually denoted herein, and collectively anti-skid body or bodies 1) are connected with one another in a circumference direction of the tire T at regular intervals. Those three anti-skid bodies 1a, 1b, and 1c are of the same structure. Accordingly, the first anti-skid body 1a will representatively be described.

The first anti-skid body 1, 1a is shown in Fig. 2 and Fig. 3 with enlarged views each depicting a posture when attached to the upper portion of the tire T. Fig. 2 is a front elevational view when viewed from the exterior of the car. Fig. 3 is a plan view when viewed from the upper side. Fig. 4 is an enlarged cross-sectional view along line A-A in Fig. 2.

The first anti-skid body 1, 1a comprises a front-side U-shaped member 2, a rear-side U-shaped member 3, and an interior-side linear-shaped member 4 connecting therebetween. The "front-side" herein is intended to mean a front side in the positive rotation direction of the tire T shown by arrow in Fig. 1, when the car moves forward, which represents the left side of the first anti-skid body 1a in Fig. 1, Fig. 2, and Fig. 3. The "rear-side" herein is intended to mean a rear side in the positive rotation direction of the tire T, which represents the right side of the first anti-skid body 1a in Fig. 1, Fig. 2, and Fig. 3. The "interior-side" or "inside" is intended to mean an interior side of the car, which is shown by broken lines in Fig. 1.

As shown in Fig. 1 to Fig. 3, the front-side and the rear-side U-shaped members 2 and 3 are formed in a spatially symmetrical structure in which steel round rods are curved into U shapes for being fitted therein with the outer circumference side of the tire T. The U-shaped members 2 and 3 respectively have crossing parts 2a and 3a crossing the tread area (ground contact area) of the tire T, exterior parts 2b and 3b located along the outside surface of the tire T, and interior parts 2c and 3c located along the inside surface of the tire T. The front-side and the rear-side U-shaped members 2 and 3 are used for being fitted therein with the tire T to make a center angle of about 60 degrees.

The front-side U-shaped member 2 is configured such that the exterior part 2b is located along the radial direction of the tire T, and an end portion of the exterior part 2b is bent and extends toward the front-side. The front-side extending end portion of the exterior part 2b is located along the circumferential direction of the tire T. The front-side U-shaped member 2 is further configured such that the interior part 2c is located along the radial direction of the tire T and an end portion of the interior part 2c is bent and extends toward the rear-side. The rear-side extending end portion of the interior part 2c is also located along the circumferential direction of the tire T.

The rear-side U-shaped member 3 is configured such that the exterior part 3b is located along the radial direction of the tire T, and an end portion of the exterior part 3b is bent and extends toward the rear-side. The rear-side extending end portion of the exterior part 3b is located along the circumferential direction of the tire T. The rear-side U-shaped member 3 is further configured such that the interior part 3c is located along the radial direction of the tire T, and an end portion of the interior part 3c is bent and extends toward the front-side. The front-side extending end portion of the interior part 3c is also located along the circumferential direction of the tire T.

The interior-side linear-shaped member 4 is provided as a chain. This chain 4 comprises a plurality of plate-like links connected with one another by pins into a string-shape so as to be pivotally movable relative to one another. Thus, the interior-side linear-shaped member 4 is provided as a leaf chain.

As shown in Fig. 1 to Fig. 3, the front-side U-shaped member 2 is attached thereto with two contact members 6 each having a cylindrical shape such that one contact member 6 is inserted therein with the front-side extending end portion of the exterior part 2b and the other contact member 6 is inserted therein with the rear-side extending end portion of the interior part 2c. In addition, the rear-side U-shaped member 3 is also attached thereto with two contact members 6 each having a cylindrical shape such that one contact member 6 is inserted therein with the rear-side extending end portion of the exterior part 3b and the other contact member 6 is inserted therein with the front-side extending end portion of the interior part 3c. Those contact members 6 are arranged along the circumferential direction of the tire T. In the present embodiment, each contact member 6 is made of rubber, and the outer surface thereof is formed as being a cylindrical surface. The cylindrical surface of the outer surface of the outside contact member 6 contacts with the outside surface of the tire T. The cylindrical surface of the outer surface of the inside contact member 6 contacts with the inside surface of the tire T. Each contact member 6 is configured as being rotatable around the axis thereof.

In particular, the outside contact member 6 contacts with the tire T in an inner area of the outside surface of the tire T. The inside contact member 6 also contacts with the tire T in an inner area of the inside surface of the tire T. The tire T deforms in its cross-section into low-profiled at the time of ground contact and in turn recovers its profile thereby to result in that the outer diameter and the outer width periodically vary. The variation amount of the outer width of the tire T is less in the inner area at the side of the rim compared to the outer area at the side of ground contact. According to the present embodiment, the outside and the inside contact members 6 contact with the inner areas of the outside and the inside surfaces of the tire T, respectively, and the anti-skid bodies 1 are thus prevented from being loosened to move on the tire T or tightened to receive larger force from the tire T.

Moreover, in the front-side U-shaped member 2 or the rear-side U-shaped member 3, the outside contact member 6 and the inside contact member 6 are each located to have a certain offset from the width direction of the anti-skid body 1 rather than facing each other in the width direction. Therefore, the distance between those outside and inside contact members 6 is larger than the inner width of the anti-skid body 1. The outer width of the tire T is larger within the middle area between the inner area and the outer area than that within the inner area. According to the present embodiment, the anti-skid body 1 is easy to be attached to the tire T and removed therefrom, because the distance between the outside and the inside contact members 6 is larger than the inner width of the anti-skid body 1.

As shown in Fig. 3 and Fig. 4, the leading end of the interior-side linear-shaped member 4 is detachably attached to the end of the interior part 2c of the front-side U-shaped member 2 using a bolt 7 and a nut 8. The nut 8 is provided with a split pin for preventing from falling off. Removing the split pin and reversely screwing the nut 8 to put the bolt 7 off, the interior part 2c of the front-side U-shaped member 2 and the interior-side linear-shaped member 4 are separated from each other. If the interior-side linear-shaped member 4 is separated from the interior part 2c of the front-side U-shaped member 2, then the inside contact member 6 attached to the rear-side extending end portion of the interior part 2c is allowed to be released by being moved in the axis direction. This contact member 6 is thus interchangeable. The contact member 6 may be changed to another if the size such as outer diameter is not adaptable. The contact member 6 may also be changed to a new one if being abraded or damaged.

Similar to the leading end, the trailing end of the interior-side linear-shaped member 4 is detachably attached to the end of the interior part 3c of the rear-side U-shaped member 3 using a bolt 7 and a nut 8. The nut 8 is provided with a split pin for preventing from falling off. Removing the split pin and reversely screwing the nut 8 to put the bolt 7 off, the interior part 3c of the rear-side U-shaped member 3 and the interior-side linear-shaped member 4 are separated from each other. If the interior-side linear-shaped member 4 is separated from the interior part 3c of the rear-side U-shaped member 3, then the inside contact member 6 attached to the front-side extending end portion of the interior part 3c is allowed to be released by being moved in the axis direction. This contact member 6 is thus interchangeable.

The exterior part 2b of the front-side U-shaped member 2 is attached thereto with a front-side linking member 11. The exterior part 3b of the rear-side U-shaped member 3 is also attached thereto with a rear-side linking member 12. The front-side and the rear-side linking members 11 and 12 are each provided as a chain. This chain 11 or 12 comprises a plurality of plate-like links connected with one another by pins into a string-shape so as to be pivotally movable relative to one another. Thus, the linking members 11 and 12 are provided as leaf chains. The leading end of the front-side linking member 11 is provided thereto with a female-type linking component. The trailing end of the rear-side linking member 12 is provided thereto with a male-type linking component. These male-type and female-type linking components are made as being linkable with each other and separable.

The trailing end of the front-side linking member 11 is detachably attached to the end of the exterior part 2b of the front-side U-shaped member 2 using a bolt 7 and a nut 8. This attaching structure is similar to that for the interior-side linear-shaped member 4 using the bolt 7 and the nut 8. Reversely screwing the nut 8 to put the bolt 7 off, the exterior part 2b of the front-side U-shaped member 2 and the front-side linking member 11 are separated from each other. If the front-side linking member 11 is separated from the exterior part 2b of the front-side U-shaped member 2, then the outside contact member 6 attached to the front-side extending end portion of the exterior part 2b is allowed to be released by being moved in the axis direction. This contact member 6 is thus interchangeable.

Similar to the front-side linking member 11, the leading end of the rear-side linking member 12 is detachably attached to the end of the exterior part 3b of the rear-side U-shaped member 3 using a bolt 7 and a nut 8. Putting the bolt 7 off, the exterior part 3b of the rear-side U-shaped member 3 and the rear-side linking member 12 are separated from each other. If the rear-side linking member 12 is separated from the exterior part 3b of the rear-side U-shaped member 3, then the outside contact member 6 attached to the rear-side extending end portion of the exterior part 3b is allowed to be released by being moved in the axis direction. This contact member 6 is thus interchangeable.

As described hereinbefore, the anti-skid body 1 is configured to have a U-shaped cross-section for being fitted therein with the tire T. The anti-skid body 1 with the U-shaped cross-section is configured such that: the crossing parts 2a and the 3a of the front-side and the rear-side U-shaped members 2 and 3 represent crossing parts which cross the ground contact surface of the tire T; the exterior parts 2b and 3b of the front-side and the rear-side U-shaped members 2 and 3 represent exterior parts which are arranged along the outside surface of the tire T; and the interior parts 2c and 3c of the front-side and the rear-side U-shaped members 2 and 3 and the interior-side linear-shaped member 4 represent interior parts which are arranged along the inside surface of the tire T. The respective exterior parts of the anti-skid body 1 are attached thereto with the front-side linking member 11 and the rear-side linking member 12 at the front-side end and the rear-side end of the anti-skid body 1, respectively, in the circumferential direction of the tire T. Respective contact members 6 are attached to the anti-skid body 1 at the front-side and the rear-side of the exterior parts and the front-side and the rear-side of the interior parts.

### [Second embodiment (refer to Fig. 5 to Fig. 8)]

The present embodiment is modified in part from the anti-skid device for tires according to the first embodiment. Specifically, changes are made for front-side and rear-side U-shaped members 2 and 3 with respect to the shape of extending end portions of exterior parts 2b and 3b and interior parts 2c and 3c and the shape of contact members 6 attached to those extending end portions.
Fig. 5 to Fig. 8 correspond to Fig. 1 to Fig. 4 in the first embodiment, respectively.

The extending end portions of the exterior parts 2b and 3b and the interior parts 2c and 3c of the front-side and the rear-side U-shaped members 2 and 3 are modified, as shown in Fig. 5, such that the angle for bending them toward the front-side or the rear-side from positions along the radial direction of the tire T is about 60 degrees rather than being slightly below 90 degrees as in the first embodiment. The front-side extending end portions and the rear-side extending end portions of the exterior parts 2b and 3b and the interior parts 2c and 3c of the front-side and the rear-side U-shaped members 2 and 3 are each arranged to be inclined to the circumferential direction of the tire T.

The rear-side extending end portion of the interior part 2c of the front-side U-shaped member 2, the front-side extending end portion of the interior part 3c of the rear-side U-shaped member 3, and the interior-side linear-shaped member 4 therebetween are located on a straight line. The front-side extending end portion of the exterior part 2b of the front-side U-shaped member 2 and the corresponding front-side linking member 11 are located on a straight line, and the rear-side linking member 12 of the next anti-skid body connected with that front-side linking member 11 and the rear-side extending end portion of the exterior part 3b of the corresponding rear-side U-shaped member 3 are also located on the same straight line.

Cylindrical-like contact members 6, which are attached to the front-side extending end portions or the rear-side extending end portions of the exterior parts 2b and 3b and the interior parts 2c and 3c of the front-side and the rear-side U-shaped members 2 and 3 so as to be inserted therein with the extending end portions, are made to have outer surfaces of conical surfaces, as shown in Fig. 5 to Fig. 7, rather than having cylindrical surfaces with uniform diameter as in the first embodiment. The contact members 6 are arranged such that the larger diameter end of each conical surface as the outer surface is located near the rim or the center of the tire T compared to the smaller diameter end. This conical surface contacts with the inner area of the outside surface of the tire T or the inner area of the inside surface of the tire T.

As shown in Fig. 8, the outer width of the tire T comes to be narrow within the inner area at the rim side as approaching the rim or the center of the tire T. According to the present embodiment, the contact surface of each contact member 6 with the outside surface or the inside surface of the tire T is increased because the contact members 6 are arranged such that the larger diameter end of each conical surface as the outer surface is located near the rim or the center of the tire T compared to the smaller diameter end.

Other features are similar to those in the first embodiment. In the drawings, similar components to those in the first embodiment are denoted by the same reference numerals or characters.

### [Examples in modification]

1. In the above embodiments, the contact members 6 are not allowed to move toward the side of the bolt and nut 7 and 8 because of abutting them, while being movable toward the opposite side thereof. Alternatively, at least one of the contact members 6 may be made as not being allowed to move toward that opposite side by providing an appropriate slip stopper.
2. In the above embodiments, the contact members 6 are made as being rotatable around the axes. Alternatively, at least one of the contact members 6 may be made as not being rotatable around the axes.
3. In the above embodiments, the outer surface of each contact member 6 is made as being cylindrical surface or conical surface. Alternatively, the outer surface of at least one of the contact members 6 may be made as being prismatic surface or pyramid surface.
4. In the above embodiments, the contact members 6 are made of rubber. Alternatively, they may be made of elastic synthetic resin or other materials.
5. In the above embodiment, no stiffener is used for the contact members 6. Stiffeners such as cores may be additionally provided for the contact members 6.
6. In the above embodiment, center holes of the contact members 6 are circular holes. Alternatively, they may be rectangular holes.
7. In the above embodiment, the front-side U-shaped member 2 and the rear-side U-shaped member 3 are made of round rods. Alternatively, at least one of them may be made of rectangular rod(s).
8. In the above embodiments, the interior part 2c of the front-side U-shaped member 2, the interior-side linear-shaped member 4, and the interior part 3c of the rear-side U-shaped member 3 are configured as being separable. Alternatively, they may be configured as being at least partly inseparable. In the above embodiments, the exterior part 2b of the front-side U-shaped member 2 and the front-side linking member 11 are configured as being separable, and the exterior part 3b of the rear-side U-shaped member 3 and the rear-side linking member 12 are also configured as being separable. Alternatively, they may be configured as being at least partly inseparable.

### [Industrial Applicability]

The anti-skid device for tires according to the present invention can be applied to the usage for various cars, such as small size, middle size, or large size passenger cars or motor trucks.

### [Reference Signs List]

T; tire for cars
1, 1a, 1b, 1c; anti-skid body
1a; first anti-skid body
1b; second anti-skid body
1c; third anti-skid body
2; front-side U-shaped member
2a; crossing part
2b; exterior part
2c; interior part
3; rear-side U-shaped member
3a; crossing part
3b; exterior part
3c; interior part
4; interior-side linear-shaped member
2a, 3a; crossing part of anti-skid body
2b, 3b; exterior part of anti-skid body
2c, 3c, 4; interior part of anti-skid body
6; contact member, cylindrical contact member, outside contact member, inside contact
member
7; bolt
8; nut
11; front-side linking member
12; rear-side linking member

## Claims

1. An anti-skid device for tires, comprising two or more anti-skid bodies for being fitted therein with a tire of a car and arranged around entire circumference of the tire to be connected with one another, each of the anti-skid bodies having a U-shaped cross-section and comprising a front-side U-shaped member and a rear-side U-shaped member respectively located at front-side and rear-side with respect to a rotation direction of the tire when the car moves forward, each of the front-side U-shaped member and the rear-side U-shaped member having an exterior part and an interior part respectively along an outside surface and an inside surface of the tire, the exterior part being attached thereto with a contact member for contacting with the outside surface of the tire, the interior part being attached thereto with a contact member for contacting with the inside surface of the tire, wherein
each contact member has a cylindrical-like shape for contacting with the outside surface or the inside surface of the tire, and wherein
the front-side U-shaped member or the rear-side U-shaped member is configured such that the exterior part or the interior part thereof is located along a radial direction of the tire, and an end portion of the exterior part or the interior part is bent and extends toward the front-side or the rear-side, and the contact member is attached to the extending end portion of the exterior part or the interior part so as to be inserted therein with the extending end portion.

2. The anti-skid device for tires as set forth in claim 1, wherein
the front-side U-shaped member is configured such that the exterior part thereof is located along a radial direction of the tire, and an end portion of the exterior part is bent and extends toward the front-side, and the contact member of outside is attached to the front-side extending end portion of the exterior part so as to be inserted therein with the front-side extending end portion, while the front-side U-shaped member is further configured such that the interior part thereof is located along a radial direction of the tire,
and an end portion of the interior part is bent and extends toward the rear-side, and the contact member of inside is attached to the rear-side extending end portion of the interior part so as to be inserted therein with the rear-side extending end portion, and
wherein
the rear-side U-shaped member is configured such that the exterior part thereof is located along a radial direction of the tire, and an end portion of the exterior part is bent and extends toward the rear-side, and the contact member of outside is attached to the rear-side extending end portion of the exterior part so as to be inserted therein with the rear-side extending end portion, while the rear-side U-shaped member is further configured such that the interior part thereof is located along a radial direction of the tire,
and an end portion of the interior part is bent and extends toward the front-side, and the contact member of inside is attached to the front-side extending end portion of the interior part so as to be inserted therein with the front-side extending end portion.

3. The anti-skid device for tires as set forth in claim 1 or 2, wherein each contact member is made of rubber or elastic synthetic resin.

4. The anti-skid device for tires as set forth in claim 1, 2, or 3, wherein each contact member is configured as being rotatable around an axis.

5. The anti-skid device for tires as set forth in either one of claims 1 to 4, wherein each contact member is configured as being interchangeable.

6. The anti-skid device for tires as set forth in either one of claims 1 to 5, wherein the extending end portion of the exterior part or the interior part of the front-side or the rear-side U-shaped member is located along circumferential direction of the tire, and the cylindrical-like contact member to which the extending end portion is inserted has an outer surface of cylindrical surface or prismatic surface, and wherein
the outer surface of the cylindrical-like contact member is configured to contact with the outside surface or the inside surface of the tire.

7. The anti-skid device for tires as set forth in either one of claims 1 to 5, wherein the extending end portion of the exterior part or the interior part of the front-side or the rear-side U-shaped member is located to be inclined to circumferential direction of the tire, and the cylindrical-like contact member to which the extending end portion is inserted has an outer surface of conical surface or pyramid surface, and wherein
the outer surface of the cylindrical-like contact member is configured to contact with an inner area of the outside surface or the inside surface of the tire such that larger diameter end thereof is located near the center of the tire compared to smaller diameter end.
